# EUROPEAN PATENT SPECIFICATION

(11) **EP 2 311 775 B1**
(45) Date of publication and mention of the grant of the patent: **03.09.2014**
(21) Application number: 09800234.8
(22) Date of filing: 24.07.2009
(51) Int. Cl.: B01J 8/04, C01B 3/38, C01B 3/48, H01M 8/06

(54) **HYDROGEN GENERATION DEVICE AND FUEL CELL SYSTEM PROVIDED THEREWITH**
VORRICHTUNG ZUR WASSERSTOFFERZEUGUNG UND BRENNSTOFFZELLENSYSTEM DAMIT
DISPOSITIF DE GÉNÉRATION D'HYDROGÈNE ET SYSTÈME POUR PILE À COMBUSTIBLE ÉQUIPÉ DE CELUI-CI

(30) Priority: 25.07.2008 JP 2008192200; 09.09.2008 JP 2008230537
(43) Date of publication of application: 20.04.2011
(73) Proprietor: Panasonic Corporation, Kadoma-shi Osaka 571-8501 (JP)
(72) Inventor: MAENISHI, Akira, Chuo-ku Osaka-shi Osaka 540-6207 (JP); MUKAI, Yuuji, Chuo-ku Osaka-shi Osaka 540-6207 (JP); FUJIOKA, Hiroki, Chuo-ku Osaka-shi Osaka 540-6207 (JP); YUKIMASA, Akinori, Chuo-ku Osaka-shi Osaka 540-6207 (JP); TAGUCHI, Kiyoshi, Chuo-ku Osaka-shi Osaka 540-6207 (JP); YASUDA, Shigeki, Chuo-ku Osaka-shi Osaka 540-6207 (JP); NAKAMURA, Akinari, Chuo-ku Osaka-shi Osaka 540-6207 (JP)
(74) Representative: Grünecker, Kinkeldey, Stockmair & Schwanhäusser
(86) International application number: PCT/JP2009/003508
(87) International publication number: WO 2010/010718

(56) References cited:
- JP-A- 2002 284 506
- JP-A- 2003 226 506
- JP-A- 2006 176 398
- JP-A- 2006 206 383
- US-A1- 2007 020 161

## Description

### Technical Field

The present invention relates to a hydrogen generation device configured to produce a hydrogen-rich, hydrogen-containing gas by using as a raw gas a hydrocarbon-based fuel such as a town gas and an LPG, and also relates to a fuel cell system including a fuel cell configured to generate electric power by using a hydrogen-containing gas produced by the hydrogen generation device.

### Background Art

A fuel cell system capable of efficiently generating electric power on a small scale facilitates a formulation of a system for using heat energy generated during electric power generation. For this reason, the fuel cell system has been developed as a distributed power generation system with high energy-use efficiency. The fuel cell system includes a fuel cell configured to convert chemical energy of a hydrogen-containing fuel gas and chemical energy of an oxidant gas into electric energy by predetermined electro-chemical reaction. The electric energy generated by the fuel cell is supplied from the fuel cell system to an electrical load.

An infrastructure for a hydrogen-containing fuel gas used in the fuel cell system has not yet been generally built. Consequently, a fuel cell system usually includes a hydrogen generation device for generating a fuel gas. Such hydrogen generation device provided for the fuel cell system includes, for example, a reformer including a reforming catalyst and a combustion burner disposed adjacent to or built in the reformer. The combustion burner is provided with a combustion fan. In the combustion burner, combustion occurs by using a superfluous fuel gas (hereinafter called an "off-gas") emitted from a fuel cell and a combustion air fed from the combustion fan. The hydrogen generation device produces a hydrogen-rich combustion gas by using a steam reforming reaction developed in the reformer by a raw gas such as a natural gas, water, and a reforming catalyst heated by the combustion burner.

Various hydrogen generation devices have been proposed from viewpoints of size reduction, higher efficiency, enhanced operation stability, and cost reduction. For example, a reforming configuration having a compact, cylindrical and vertically elongated shape, or a cylindrical configuration having an integrated structure including a reforming unit and a carbon monoxide elimination unit is proposed as a general configuration (see, for example, Patent Documents 1 and 2).

Moreover, a hydrogen generation device including a cylindrical reformer arranged so as to surround a combustion burner in order to enhance heat efficiency is known (see, for example, Patent Document 3). The, hydrogen generation device described in Patent Document 3 includes a reformer configured to perform a steam reforming reaction and a shift unit configured to perform a shift reaction to decrease a carbon monoxide content in a gas, which are integrally stored in a cylindrical container. The cylindrical container is connected to pipes that form a flow channel for supplying a raw gas, an off-gas, water, and air for combustion purpose and a flow channel for discharging hydrogen discharged from the hydrogen generation device and a combustion exhaust discharged from the combustion burner.

The hydrogen generation device is usually as heavy as 10 to 20 kg. For this reason, it has been proposed that the hydrogen generation device is supported on and secured to a frame of a fuel cell system when packaged as the fuel cell system along with fuel cell (see, for example, Patent Document 4). In the hydrogen generation device described in Patent Document 4, when a reforming unit and a CO shift unit are disposed separately from each other, a connecting pipe for connecting a heat exchanger to the reforming unit is interposed between the reforming unit and the CO shift unit. As described in Patent Document 1, a fuel burner, the reforming unit, the heat exchanger, a CO shift unit, and the CO oxidation unit are integrally formed in consideration of: a decrease in efficiency caused by dissipation of heat from the connecting pipe which connects the heat exchanger provided between the reforming unit and the CO shift unit to the reforming unit in a case in which the reforming unit and the CO shift unit are separately provided; and breakage caused by concentration of thermal stress in a junction between the connecting pipe and the reforming unit or the heat exchanger. Moreover, in a fuel reforming device inserted into a package main unit of a fuel cell system, the fuel reforming device is joined to the package main unit such that a relatively low temperature portion or a portion required to be cooled is joined to the package main unit by way of a flange portion. Accordingly, a decrease in efficiency caused by heat dissipated by way of the connecting unit is prevented. For example, in a combustion burner provided in the reforming device, the flange portion that is a relatively low temperature portion located in a vicinity of a portion for introducing fuel/air and an anode off-gas is joined to a bracket, and the reforming device is configured so as to be indirectly supported by the package main unit by way of the bracket.

US 2007/020161 A1 relates to a reformer for a fuel cell system comprising a first and second reacting region generating heat energy and hydrogen gas, respectively.

### Related Art Documents

### Patent Documents

Patent Document 1: JP-A-2005-306658
Patent Document 2: JP-A-2004-149402
Patent Document 3: JP-A-2008-063171
Patent Document 4: JP-A-2002-284506

### Summary of the Invention

### Problem to be Solved by the Invention

However, in the hydrogen generation device, a reforming catalyst layer (a reforming unit) is heated up to as high a temperature as 600°C to 700°C during operation, and hence a metallic structure serving as a hydrogen generation device main unit placed at a temperature where the reforming catalyst layer can cause a reaction is also at a similar temperature. Since the metallic structure thermally expands according to a temperature, great stress sometimes occurs in the metallic structure in its vertical direction for reasons of thermal expansion. If such stress occurs when pipes, such as a gas pipe and a water pipe, or a junction between the metallic structure and an external support is situated upper part and lower part of the metallic structure, great stress may be exerted on the pipe or the junction, to cause damage, such as deformation, cracking, or breakage.

An object of the present invention is to provide a hydrogen generation device and a fuel cell system provided therewith which suppress a possibility of breakage of members, such as various pipes connected to a hydrogen generation device main unit, for reasons of thermal stress caused by thermal expansion during operation and contraction by cooling during halts.

### Means for Solving the Problem

A hydrogen generation device of the present invention comprises the features of claim 1.

In the configuration, all of the various pipes are placed in a portion of the main body which comes to a low temperature during operation, and the support of the main body is also placed at the low temperature portion. In the low temperature portion, thermal stress caused by thermal expansion of the main body during operation and cooling contraction of the main body during a halt is comparatively small. Therefore, the present configuration can reduce the possibility that the pipes, the main body, and the support are damaged by thermal stress.

Preferably, in the hydrogen generation device , a pipe orifice forming body having a pipe orifice used for connection with at least a part of the plurality of pipes is provided in the low temperature portion of the main body, and the support is connected to the pipe orifice forming body to support the main body.

In the configuration, at least a part of the plurality of pipes and the support are connected to the pipe orifice forming body disposed in the low temperature portion. Therefore, it becomes possible to more prevent breakage of the pipes, the main body, and the support, caused by thermal stress.

Preferably, all of the plurality of pipes are connected to the pipe orifice forming body.

In the configuration, all of the plurality of pipes are connected to the pipe orifice forming body. Therefore, it becomes possible to more prevent breakage of the pipes, the main body, and the support, caused by thermal stress. Moreover, it is possible to facilitate assembly and maintenance of the hydrogen generation device.

Preferably, in the hydrogen generation device, the main body comprises therein: a reforming unit configured to subject a raw gas serving as the predetermined medium and steam to reforming reaction, thereby generating a reformed gas containing hydrogen; a shift unit configured to decrease carbon monoxide in the reformed gas by CO shift reaction; and an oxidation unit configured to subject the reformed gas in which carbon monoxide is decreased by the shift unit to CO oxidation in conjunction with oxygen, thereby further decreasing carbon monoxide, and the plurality of pipes and the support are situated on a lower temperature side of the low temperature portion than the shift unit and the oxidation unit.

In the configuration, various pipes and the support of the main body are placed on the lower temperature side in the low temperature portion than the shift unit and the oxidation unit. Therefore, the configuration can prevent breakage of the pipes, the main body, and the support, caused by thermal stress.

It is preferable to place the reforming unit, the shift unit, and the oxidation unit so as not to overlap in a direction of the temperature gradient.

The hydrogen generation device is frequently configured so as to become longer in the direction of the temperature gradient. When thermally expanded, the members may expand longer in the direction of the temperature gradient with high possibility. The configuration can suppress the influence of extension due to thermal expansion.

Preferably, a heat insulator is provided between the main body and the support, and space is provided between the heat insulator and a face of the main body on a high temperature side which opposes the heat insulator. More preferably, the space has a length longer than a length of an extension of the main body when the main body is thermally expanded during operation of the combustion unit.

In the configuration, even when the main body has extended for reasons of thermal expansion during operation, the main body does not interfere with the heat insulator. Therefore, stable heat insulating performance is maintained.

Preferably, the pipe orifice forming body is fixed to the support, at least, at two portions located to sandwich the pipe orifice.

In the configuration, the pipe orifice forming body is fixed to the support, at least, at two portions while the pipe orifices are sandwiched between the portions. Hence, deformation due to thermal stress is prevented. Accordingly, since movement of the pipe orifice is also suppressed, it is possible to prevent breakage of the pipes connected to the pipe orifices more effectively.

Preferably, the pipe orifice forming body is disposed at one end of the main body in an axial direction of the main body.

In the configuration, the main body is supported by the support in a vicinity of one end of the main body by way of the pipe orifice forming body. Therefore, the main body can be thermally, freely deformed toward the other end of the main body that is not supported by the support. Accordingly, it is possible to prevent occurrence of fracture at a specific location on the main body, which is caused by the thermal stress.

Preferably, the heat insulator is provided between the main body and the pipe orifice forming body.

In the configuration, the heat insulator can prevent conduction of heat from the main body to the pipe orifice forming body. Hence, a temperature change occurring in the pipe orifice forming body can be reduced further. When a temperature change occurs between operation of the hydrogen generation device and a halt of the same, thermal stress generated in the vicinity of the pipe orifices can be reduced.

There is provided a fuel cell system comprising the hydrogen generation device and a fuel cell configured to produce electric power by using a hydrogen-containing gas fed from the hydrogen generation device.

The fuel cell system can prevent breakage and deterioration of the pipes of the hydrogen generation device, thereby making operation of the fuel cell system stable and life of the fuel cell system longer.

### Advantages of the Invention

A hydrogen generation device or a fuel cell system of the present invention can prevent deterioration or breakage of portions of the hydrogen generation device caused by thermal stress occurring in association with repeated operations and halts. Thus, the stability of the device and the system is enhanced, thereby increasing the lift of the device and the system.

### Brief Description of the Drawings

Fig. 1 is a block diagram showing a general configuration of a fuel cell system of a first embodiment.
Fig. 2 is a longitudinal cross sectional view of a main portion of a hydrogen generation device main unit of the first embodiment.
Fig. 3 is an enlarged view of a portion of Fig. 2.
Fig. 4 is a front view of the hydrogen generation device.
Fig. 5(a) is a plan view of the hydrogen generation device, Fig. 5(b) is a plan view of the hydrogen generation device for explaining a first modification of a layout of a fastening member, and Fig. 5(c) is a plan view of the hydrogen generation device for explaining a second modification of the layout of the fastening member.
Fig. 6 is a front view of a modification of the hydrogen generation device.
Fig. 7 is a front view of the hydrogen generation device showing a modification of a retainer.
Fig. 8 is a cross sectional view showing a general configuration of a hydrogen generator (a hydrogen generation device) of a second embodiment.

### Mode for Carrying Out the invention

Embodiments for implementing the present invention are hereunder described in detail by reference to the drawings. Throughout the drawings, identical or similar elements are assigned the same reference numerals, and their repeated explanations are omitted.

### (First Embodiment)

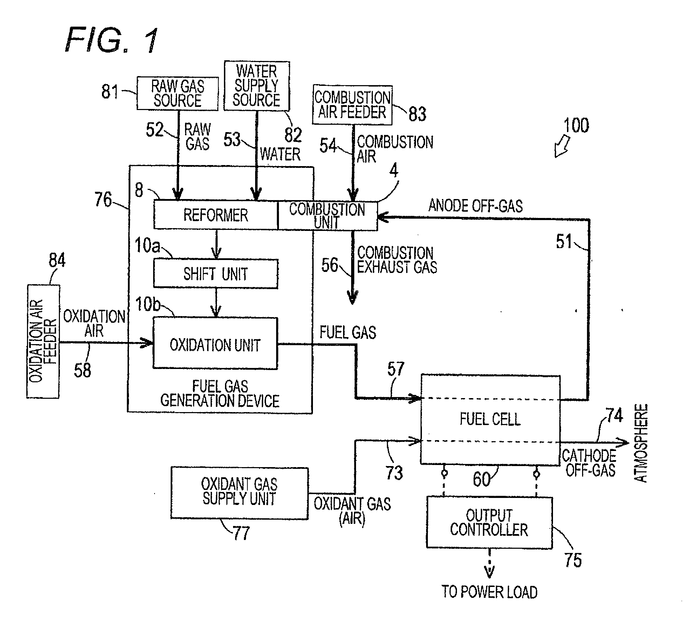

First, a general configuration of a fuel cell system including a hydrogen generation device of a first embodiment of the present invention is described. Fig. 1 is a block diagram showing a general configuration of the fuel cell system of the present embodiment.

As shown in Fig. 1, a fuel cell system 100 has a fuel cell 60 that is supplied fuel gas and oxidant gas, and generates electricity and heat; a hydrogen generation device (a fuel gas generation device) 76 that generates a hydrogen-rich fuel gas and supplies the gas to the fuel cell 60; and an oxidant gas supply unit 77 that supplies the fuel cell 60 with the oxidant gas. In the present embodiment, the oxidant gas is air, and the oxidant gas supply unit 77 includes, for example, an air fan, such as a blower, and a humidifier for humidifying the air fed from the air fan in a compressed fashion.

The hydrogen generation device 76 is supplied with a raw gas from a raw gas feeder (a raw gas source) 81 and water from a water feeder (a water supply source) 82. The raw gas feeder 81 is, for example, a flow controller that controls a feed rate of a raw gas serving as a raw gas source, such as a town gas and a propane gas. The flow controller is specifically built from a flow control valve, a pump, and an on-off valve. The water feeder 82 is built from, for example, a flow rate regulator for controlling a rate of water supply from a city water infrastructure, or the like, serving as a source of water supply; specifically, a flow rate regulator, a pump, and an on-off valve. The hydrogen generation device 76 produces a fuel gas (a hydrogen-containing gas) to be used as a reducer gas by the fuel cell 60, by using the fed raw gas and water and heat originating from a combustor (a combustion unit) 4. A configuration of the hydrogen generation device 76 is described in detail later.

The fuel cell 60 can be configured, for example, by a polyelectrolyte fuel cell with a MEA that includes a polyelectrolyte membrane which exhibits a protonic conductivity of selectively transporting protons in a moisture state and a pair of electrodes consisting of an anode and a cathode. In the fuel cell 60, a fuel gas fed to the anode and an oxidant gas fed to the cathode electrochemically react with each other, to generate electricity, heat, and water.

Output terminals of the fuel cell 60 are connected to an output controller 75 having an inverter for converting direct-current power generated by the fuel cell 60 into alternating-current power. The output controller 75 is connected to a power load. Electric generating capacity of the fuel cell 60 is controlled by the output controller 75.

The fuel cell 60 emits a superfluous fuel gas which has not been used for reaction. An off-gas (an anode off-gas) containing the superfluous fuel gas is fed to the combustor 4 and used as a fuel in the combustor. The fuel cell 60 emits the superfluous oxidant gas. Another off-gas containing the superfluous oxidant gas (a cathode off-gas) is discharged into the air.

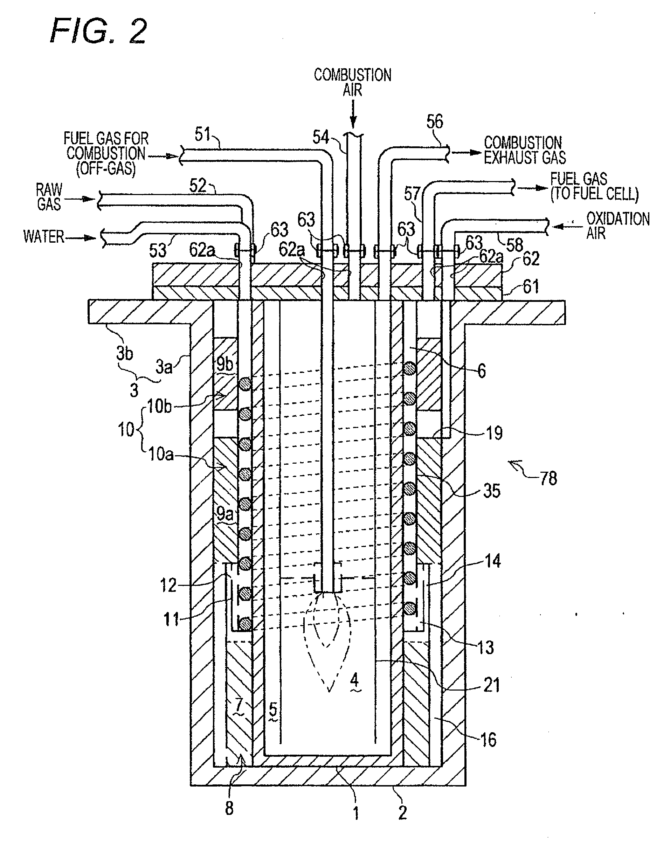

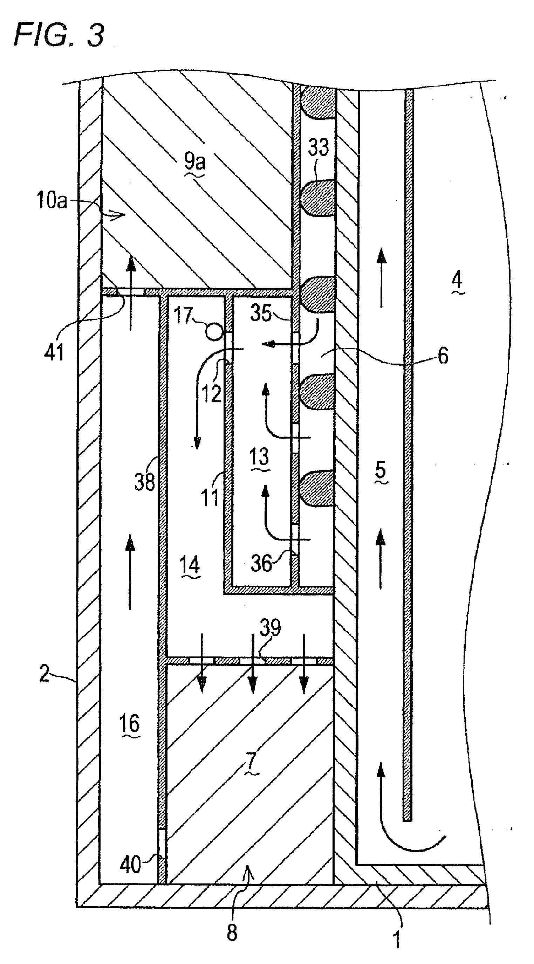

A detailed explanation is given to the hydrogen generation device 76. Fig. 2 is a longitudinal cross sectional view of a main portion of the hydrogen generation device main unit of the present embodiment, and Fig. 3 is an enlarged view of a portion of Fig. 2.

As shown in Figs. 1 to 3, the hydrogen generation device 76 includes a hydrogen generation device main body (a main body) 78. The main body 78 includes a reformer (a reforming unit) 8, a shift unit 10a, an oxidation unit 10b, and the combustor 4, which are stored in a housing 3. The housing 3 storing the reformer 8 and the combustor 4 as described above forms an exterior surface (an outer bailey) of the hydrogen generation device main body 78. The housing 3 includes a barrel 3a, which makes up a cylindrical element having an open upper end and a closed lower end, and a flange 3b located on the open upper, end of the barrel 3a. The flange 3b acts as one of constituent elements of a retainer 65 for retaining the hydrogen generation device main body 78 on support 70 to be described later.

It is desirable that a pipe orifice forming body 62 of the present invention be placed at a downstream end of the hydrogen generation device main body 78, which is a comparatively low temperature portion in the hydrogen generation device main body 78, when viewed from a direction of emission of flames from the combustor 4. Specifically, a temperature gradient occurs in a longitudinal direction (a heightwise direction in the embodiment) of the hydrogen generation device main body 78 as a result of operation of the combustor 4, whereupon a high temperature portion and a low temperature portion occur in the hydrogen generation device main body 78. In Fig. 2, a lower side of the hydrogen generation device main body 78 is a high temperature portion, and an upper side of the same is a low temperature portion. More specifically, the plate-shaped pipe orifice forming body 62 is placed so as to close an upper end opening of the housing 3. A sheet-shaped heat insulation member 61 is sandwiched between the pipe orifice forming body 62 provided on the hydrogen generation device main body 78 and the flange 3b of the housing 3. The pipe orifice forming body 62 and the flange 3b of the housing 3 are fastened together by means of fastening members 67, such as bolts and nuts.

Pipe orifices are formed in the pipe orifice forming body 62. The pipe orifices are to be brought into mutual communication with at least some of pipes in a piping group consisting of pipes for feeding various gases and water (or a predetermined medium capable of producing hydrogen) to the hydrogen generation device main body 78 and pipes through which various gases discharged from the hydrogen generation device main body 78 flow. Pipe connectors 63 are provided for pipes that are brought into mutual communication with the respective pipe orifices. The pipe orifice forming body 62 is connected to respective flow channels in the hydrogen generation device main body 78 by way of the pipe connectors 63. Pipe orifices used for establishing mutual communication with pipes forming some of the flow channels outside the hydrogen generation device main body 78 are formed in the pipe orifice forming body 62. Specifically the pipes include a raw gas feed channel 52 for feeding a raw gas from the raw gas feeder 81 to the reformer; a water feed channel 53 for feeding water from the water feeder 82 to a preheat evaporation unit 6; an oxidation air feed channel 58 for feeding oxidation air from an oxidation air feeder 84 to a CO oxidation catalyst 9b; a combustion air feed channel 54 for feeding combustion air from a combustion air feeder 83 to the combustor 4; a combustion gas discharge channel 56 for discharging a combustion exhaust developed in the combustor 4 to the outside of the hydrogen generation device 76; and a fuel gas feed channel 57 for feeding a fuel gas to the fuel cell 60. As mentioned above, the pipe orifice forming body 62 serves as a concentrated piping unit to which pipes are connected in a concentrated manner. As a result of the pipes connected to the hydrogen generation device main body 78 being connected to the pipe orifice forming body 62 in a concentrated manner as mentioned above, assembly and maintenance of the hydrogen generation device 76 can be facilitated. The raw gas feed channel 52, the oxidation air feed channel 58, the combustion air feed channel 54, the combustion gas discharge channel 56, and the fuel gas feed channel 57 are made of metallic pipes, such as stainless steel pipes. The water feed channel 53 is built from a pipe made of a resin.

The pipe connector 63 includes, for instance, a joint. For example, a quick fastener joint using a clip-shaped quick fastener is adopted as such joint, whereby a reduction in the number of piping operations performed by a worker and uniform operation can be achieved.

The housing 3 is configured by concentrically placing a cylindrical inner sleeve 1 and a cylindrical outer sleeve 2 so as to be vertically aligned in an axial direction. The combustor 4 is positioned at the center of an inner radius of the inner sleeve 1, and a combustion fuel gas is fed from the fuel cell to the combustor 4 by way of an off-gas flow channel 51, and combustion air is sent from the combustion air feeder 83 to the combustion air feed channel 54. The combustion air feeder 83 includes, for example, a blast fan. A space between the combustor 4 and the inner sleeve 1 is partitioned by a combustion cylinder 21 placed concentrically with respect to the inner sleeve 1, whereby a combustion gas flow channel 5 is formed therebetween along the inner radius of the inner sleeve 1. The combustion gas flow channel 5 is in mutual communication with the combustion gas discharge channel 56. By means of such a configuration, a hot combustion gas resulting from combustion of a combustion fuel gas in the combustor 4 ascends upward along the combustion gas flow channel 5, whereby the combustion gas is discharged outside as a combustion exhaust gas through the combustion gas discharge channel 56.

An upper portion of a cylindrical space between the inner sleeve 1 and the outer sleeve 2 is partitioned by a cylindrical partition plate 35 placed concentrically with respect to the inner sleeve 1. As a result, the preheat evaporation unit 6 is concentrically placed so as to face the inner sleeve 1, and a carbon monoxide decreasing unit 10 is concentrically placed so as to face the outer sleeve 2. The preheat evaporation unit 6 is formed as a cylindrical space along an outer peripheral surface of the inner sleeve 1. A guide element 33 is helically wrapped at a predetermined interval around the outer peripheral surface of the inner sleeve 1 in the preheat evaporation unit 6, whereby a helical channel is formed in the preheat evaporation unit 6.

The raw gas feed channel 52 and the water feed channel 53 are connected to an upper end of the preheat evaporation unit 6. Further, the reformer 8 is disposed beneath the preheat evaporation unit 6. The reformer 8 is cylindrically formed while remaining in contact with the outer peripheral surface of the inner sleeve 1, so that the reformer 8 is filled with a reforming catalyst 7.

The carbon monoxide decreasing unit 10 is cylindrically formed on an outer periphery side of an upper portion of the preheat evaporation unit 6, so as to enclose the preheat evaporation unit 6. The gas passing through the upper portion of the preheat evaporation unit 6 and the carbon monoxide decreasing unit 10 can exchange heat with each other. Communication ports 36 are formed in a vertical direction at a plurality of locations on the partition plate 35 that is situated on an outer periphery side of a lower portion of the preheat evaporation unit 6. A cylindrical partition wall 11 having an opening 12 is provided on an outer periphery side of the partition plate 35. A cylindrical heat exchange plate 38 is disposed on the outer periphery side of the partition wall 11. A guide path 13 is formed between the partition plate 35 and the partition wall 11, and a mixed gas flow channel 14 is formed between the partition wall 11 and the heat exchange plate 38. The preheat evaporation unit 6 and the guide path 13 are in mutual communication with each other by means of the communication ports 36. The guide path 13 and the mixed gas flow channel 14 are in mutual communication with each other by means of the opening 12. The mixed gas flow channel 14 and the reformer 8 are in mutual communication with each other by means of inflow ports 39. By means of the configuration, the mixed gas, which consists of steam and the raw gas heated while passing through the preheat evaporation unit 6, flows into the reformer 8 by way of the guide path 13 and the mixed gas flow channel 14.

An inner radius of the outer sleeve 2 is situated on the outer periphery side of the heat exchange plate 38. A reformed gas flow channel 16 is formed between the heat exchange plate 38 and the outer sleeve 2. The reformed gas flow channel 16 is in mutual communication with the reformer 8 by way of an outflow port 40 belonging to the heat exchange plate 38 and further in communication with the carbon monoxide decreasing unit 10 by means of an inflow port 41 opened in an upper portion of the reformed gas flow channel 16. By means of the configuration, a gas (hereinbelow called a "reformed gas") containing a large quantity of hydrogen that has been produced by the reformer 8 by means of steam reforming reaction between the raw gas and the steam flows into the reformed gas flow channel 16 from the reformer 8. While passing through the reformed gas flow channel 16, the reformed gas exchanges heat with the gas passing through the mixed gas flow channel 14 by way of the heat exchange plate 38, to be cooled and flow into the carbon monoxide decreasing unit 10.

The carbon monoxide decreasing unit 10 includes two stages; namely, the shift unit 10a filled with a CO shift catalyst 9a serving as a carbon monoxide decreasing catalyst and the oxidation unit 10b filled with the CO oxidation catalyst 9b serving as a carbon monoxide decreasing catalyst. The shift unit 10a is disposed downstream and the oxidation unit 10b is disposed upstream in such a way that the shift unit 10a acts as a preceding stage and that the oxidation unit 10b acts as a subsequent stage in the direction of flow of a reformed gas. An oxidation air flow channel 19 that is fed with oxidation air from the oxidation air feeder 84 by way of the oxidation air feed channel 58 is provided between the shift unit 10a and the oxidation unit 10b. The fuel gas feed channel 57 for feeding a fuel gas to the fuel cell 60 is connected to an upper end of the carbon monoxide decreasing unit 10. By means of the configuration, the reformed gas flowed into the carbon monoxide decreasing unit 10 changes to a fuel gas having a decreased quantity of carbon monoxide while passing through the shift unit 10a and the oxidation unit 10b, and is fed to the fuel cell 60 by way of the fuel gas feed channel 57.

An explanation is now given to a process of generation of a fuel gas in the hydrogen generation device 76 having the foregoing configuration.

In the hydrogen generation device 76, a raw gas is fed to the preheat evaporation unit 6 by way of the raw gas feed channel 52, and water is fed to the preheat evaporation unit 6 by way of the water feed channel 53. While passing through the preheat evaporation unit 6, the raw gas and the water are heated, and water thus evaporates into steam. The preheat evaporation unit 6 is heated by a combustion gas flowing through the combustion gas flow channel 5. Heat stemming from a CO shift reaction and a CO oxidation reaction occurred in the carbon monoxide decreasing unit 10 also propagates to the preheat evaporation unit 6, to additionally heat the preheat evaporation unit 6. A mixed gas consisting of the raw gas and the steam heated by the preheat evaporation unit 6 sequentially travels through the guide path 13 and the mixed gas flow channel 14, to flow into the reformer 8 in a sufficiently mixed state. In the reformer 8, the raw gas and the steam cause a steam reforming reaction by means of a catalytic action of the reforming catalyst 7, thereby generating a hydrogen-rich reformed gas. The steam reforming reaction is an endothermic reaction, and the reformer 8 is heated by the combustion gas flowing through the combustion gas flow channel 5, whereby the reaction proceeds.

The reformed gas generated by the reformer 8 flows into the reformed gas flow channel 16. While ascending through the interior of the reformed gas flow channel 16, the reformed gas exchanges heat with the mixed gas flowing through the reformer 8 and the mixed gas flow channel 14, to be cooled to a temperature appropriate for the reactions in the carbon monoxide decreasing unit 10. The reformed gas thus cooled to about 200 to 250°C flows into the shift unit 10a of the carbon monoxide decreasing unit 10, and carbon monoxide in the reformed gas is eliminated by means of the CO shift reaction. The reformed gas from which carbon monoxide has been removed by the shift unit 10a flows into the oxidation unit 10b. By means of action of the CO oxidation catalyst, the reformed gas causes a CO oxidation reaction with the oxygen in the oxidation air fed by way of the oxidation air feed channel 58, and carbon monoxide in the reformed gas is further eliminated. The reformed gas from which carbon monoxide has been eliminated by the carbon monoxide decreasing unit 10 is fed as a fuel gas to the anode of the fuel cell 60 from the carbon monoxide decreasing unit 10 by way of the fuel gas feed channel 57.

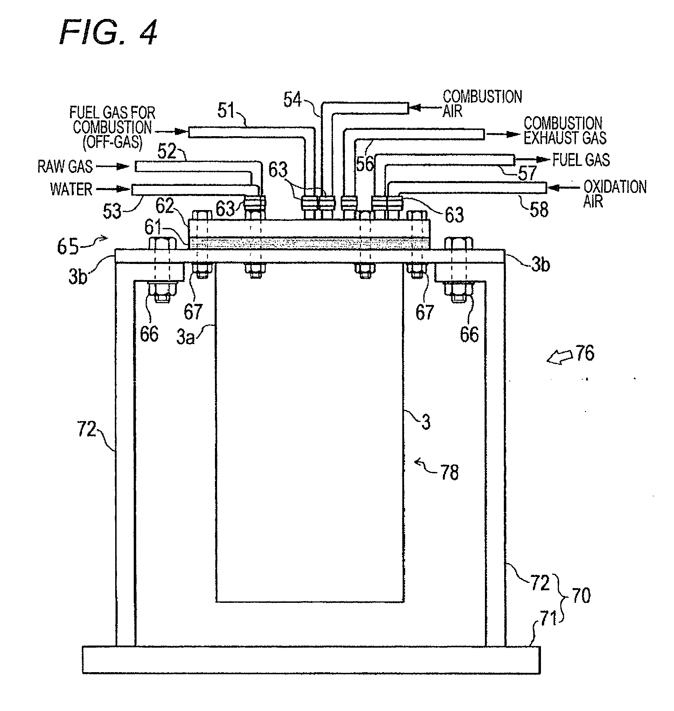

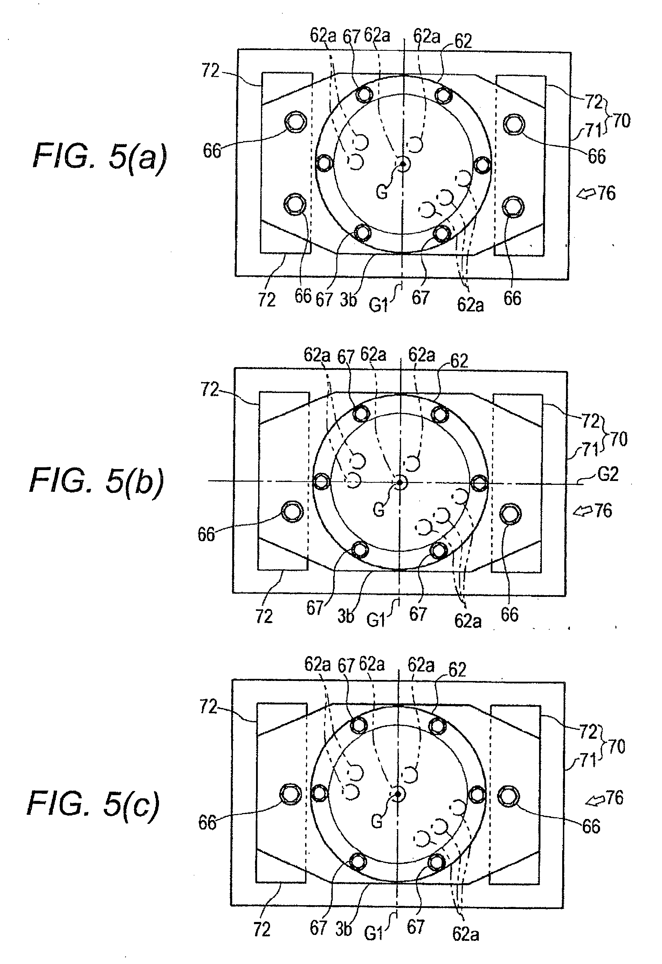

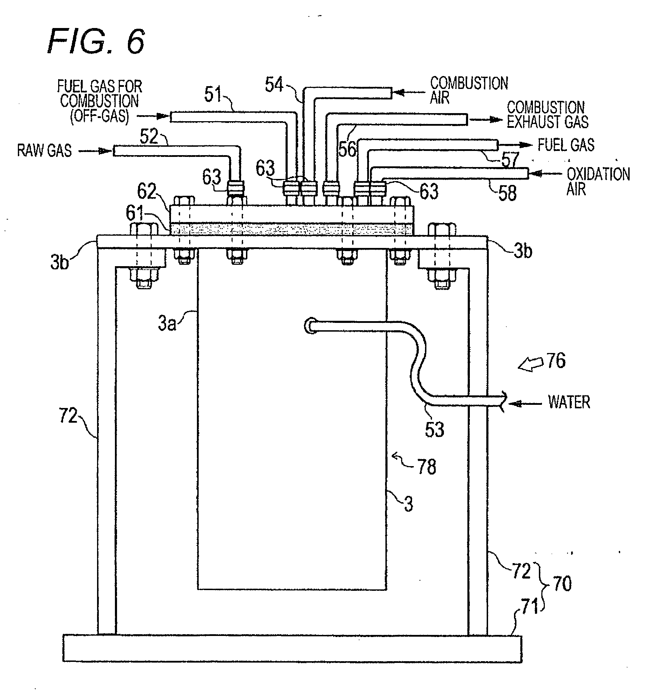

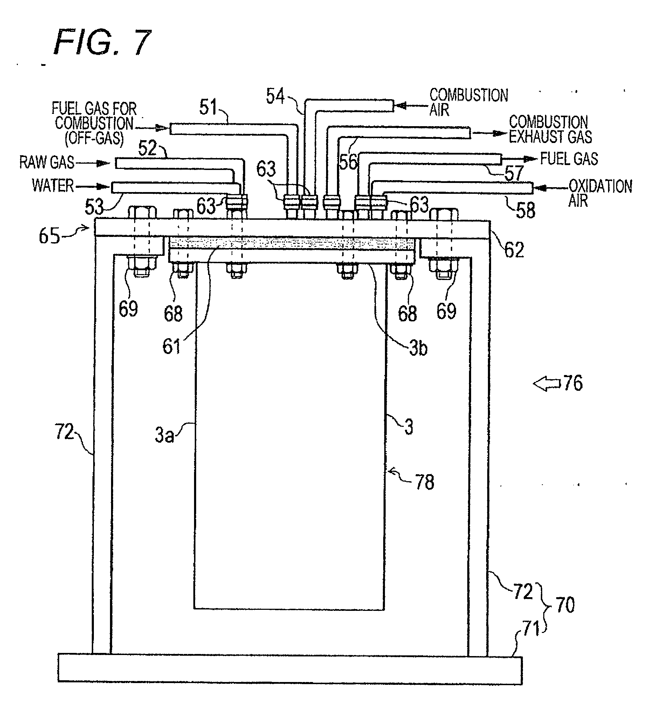

A method for fastening the hydrogen generation device 76 to a package of the fuel cell system 100 is now described. Fig. 4 is a front view of the hydrogen generation device. Fig. 5(a) is a plan view of the hydrogen generation device. Fig. 5(b) is a plan view of the hydrogen generation device for explaining a first modification of a layout of a fastening member. Fig. 5(c) is a plan view of the hydrogen generation device for explaining a second modification of the layout of the fastening member. Fig. 6 is a front view showing a modification of the hydrogen generation device. Fig. 7 is a front view of the hydrogen generation device showing a modification of a retainer. Pipes connected to the pipe orifice forming body 62 are omitted from Figs. 5.

As shown in Figs. 4 and 5(a), the hydrogen generation device 76 is disposed in the package of the fuel cell system 100 along with the fuel cell 60, and others, while the hydrogen generation device main body 78 is supported by the support 70. The support 70 may also be formed so as to be removably attached to a frame of the package of the fuel cell system 100 or integrally on a frame (a base) of the package of the fuel cell system 100.

Each of the support 70 includes a bottom plate 71 and two substantially parallel support pillars 72, 72 standing on the bottom plate 71. Each of the support pillars 72 is bent substantially at the right angle in a direction opposing its counterpart support pillar somewhat short of a top of the pillar in such a way that the top becomes substantially parallel to the bottom plate 71. The respective support pillars 72 remain in contact with the hydrogen generation device 76 by means of their tops. The flange 3b of the housing 3 is suspended across the tops of the two support pillars 72, 72. The flange 3b of the housing 3 and the tops of the support pillars 72 are fastened by means of fastening members 66, such as bolts and nuts.

In the above, the pipe orifice forming body 62 placed on the hydrogen generation device main body 78 is fixed to the support 70 by means of the retainer 65, whereby the hydrogen generation device main body 78 is supported by the support 70. In the present embodiment, the flange 3b of the housing 3, the fastening members 66 that fasten the support 70 to the flange 3b, and the fastening members 67 that fasten the flange 3b to the pipe orifice forming body 62 make up the retainer 65. In short, the pipe orifice forming body 62 is indirectly supported by the support 70 by way of the flange 3b. However, the structure of the retainer 65 is not limited to a configuration for indirectly fixing the support 70, such as that mentioned above. For example, as shown in Fig. 7, a marginal edge of the pipe orifice forming body 62 may also be extended so as to overlap the tops of the respective support pillars 72 when viewed in a plane. The marginal edge of the pipe orifice forming body 62 and the respective tops of the support pillars 72 may be fastened by means of fastening members 69, such as bolts and nuts, thereby directly fastening the pipe orifice forming body 62 to the support 70. In this case, the retainer 65 for securing the pipe orifice forming body 62 to the support 70 includes the marginal edge of the pipe orifice forming body 62 and the fastening members 69.

The fastening member 66 for fastening the support 70 to the flange 3b and the pipe orifice forming body 62 is placed at least two positions on the retainer 65 while pipe orifices 62a opened in the pipe orifice forming body 62 are sandwiched therebetween. Thereby, there is decreased a freedom degree of thermal deformation of the pipe orifice forming body 62 induced by a temperature change when the hydrogen generation device 76 is switched between operation and a halt, so that movement of the pipe orifices 62a incidental to the temperature change is lessened. The reason for this is that the flange 3b is supported by the fastening members 66 at least at two locations on the support 70, thereby preventing radial deformation of the flange 3b and in turn deformation of the pipe orifice forming body 62, as well. Therefore, the pipes connected to the hydrogen generation device main body 78 by way of the pipe orifice forming body 62 become less likely to undergo fracture which would be caused by repeated start and stop of the hydrogen generation device 76. The "two positions while the pipe orifices 62a are sandwiched therebetween" designate positions that are symmetrical about a center line G1 passing through a centroid G of the pipe orifice 62a when a group of pipe orifices 62a is viewed in a direction of a cross section taken along a direction perpendicular to the direction of extension of the hydrogen generation device 76, such as that shown in Fig. 5(a). For example, as shown in Fig. 5(b), the fastening members 66 may also be provided on one side with respect to a line G2 perpendicular to the center line G1 as well as one at each position with respect to the center line G1. Moreover, as shown in Fig. 5(c), the fastening member 66 may also be placed at two positions opposing each other with the centroid G sandwiched therebetween.

As mentioned above, the pipe orifice forming body 62 that is fixed to the support 70 so as to be restrained in movement by means of the retainer 65 acts as a portion in the hydrogen generation device 76 that causes comparatively little deformation when the hydrogen generation device 76 (the hydrogen generation device main body 78) is thermally deformed. In Fig. 2, a lower side of the hydrogen generation device main body 78 becomes a high temperature portion, and an upper side of the same becomes a low temperature portion. The pipe orifice forming body 62 is placed at the lowest temperature position in the low temperature portion (i.e., the position farthest from the combustor 4). Accordingly, the pipes connected to the pipe orifice forming body 62 that undergoes little deformation are subjected to smaller influence of thermal deformation of the hydrogen generation device main body 78 and smaller resultant stress as compared with those occurred when the pipes are connected to the other portion of the hydrogen generation device 76. Therefore, it is possible to prevent occurrence of fracture or deterioration of the hydrogen generation device 76 or the pipes connected thereto, which would otherwise be caused by concentration of thermal stress.

Moreover, in the present embodiment, the heat insulation member 61 is provided between the pipe orifice forming body 62 and the flange 3b of the housing 3, thereby blocking conduction of heat from the flange 3b to the pipe orifice forming body 62. Therefore, when the hydrogen generation device main body 78 has undergone a temperature change, a resultant temperature change in the pipe orifice forming body 62 and the pipes connected thereto can be further lessened. Consequently, it is possible to expect an effect of further lessening thermal deformation of and thermal stress on the pipe orifice forming body 62 and the pipes connected thereto.

In the embodiment, the pipe orifice forming body 62 is provided on one end of the housing 3 (the hydrogen generation device main body 78) in an axial direction of the housing 3. Specifically, the hydrogen generation device main body 78 is supported, in a vicinity of one end of the housing 3, by the support 70 by way of the pipe orifice forming body 62 and the retainer 65. Moreover, A space is provided between an exterior surface of the hydrogen generation device main body 78 (exclusive of the flange 3b of the housing 3 that forms the retainer 65) and the support 70. Specifically, a space exists between the bottom surface of the hydrogen generation device main body 78 and the bottom plate 71 of the support 70, and a space also exists between the side surface of the hydrogen generation device main body 78 and the support pillars 72, 72 of the support 70. The hydrogen generation device main body 78 is separated from the supports at such a sufficient distance that the hydrogen generation device main body 78 does not contact the support 70 even when thermally expanded.

Even when the hydrogen generation device main body 78 is subjected to thermal deformation (thermal expansion and cooling contraction), the configuration makes it possible for the hydrogen generation device main body 78 to freely undergo thermal deformation without being restrained by the retainer 65. Further, the hydrogen generation device main body 78 also undergoes thermal deformation without being hindered by the support 70. Therefore, fracture and deterioration of the hydrogen generation device 76, which would otherwise be caused by concentration of thermal stress, can be prevented.

It is also desirable that the pipe orifice forming body 62 be placed on a lower side of the hydrogen generation device main body 78 when viewed in a direction of emission of flames from the combustor 4. Specifically, it is desirable that the pipe orifice forming body 62 be placed at a position opposite to the direction of emission of flames from the combustor 4 that becomes hottest in the hydrogen generation device main body 78; in other words, a position where a comparatively small temperature change and comparatively small thermal deformation arise when the hydrogen generation device main body 78 is switched between operation and a halt. The flange 3b of the housing 3 to which the pipe orifice forming body 62 is fixed is disposed at a location on the housing 3 farthest from the combustor 4. Stress developing between the support 70 and the retainer 65 and stress developing between the pipe orifice forming body 62 and the retainer 65 can thereby be reduced further, so that thermal fatigue can be lessened.

In the embodiment, there is adopted a configuration in which the pipe orifice forming body 62, various pipes, and the support 70 are on a low temperature side that is a portion lower in temperature than the shift unit 10a and the oxidation unit 10b; namely, on a side distant from the combustor 4.

In the present embodiment, all of the pipes connected to the hydrogen generation device 76 are connected to the pipe orifice forming body 62 in a concentrated manner. The configuration makes it possible to effectively lessen damage to the pipes. However, the water feed channel 53 of the pipes is formed from a flexible pipe made of resin and can follow thermal deformation. For this reason, as shown, for example, in Fig. 6, a pipe forming the water feed channel 53 may also be connected to another portion differing from the pipe orifice forming body 62 (e.g., the barrel 3a of the housing 3).

Moreover, not all of the metallic pipes need to be connected to the pipe orifice forming body 62. So long as a plurality of pipes of a pipe group are connected to the pipe orifice forming body 62, the aforementioned advantage can be yielded to some extent, wherein the pipe group includes a pipe forming the raw gas feed channel 52 by way of which a raw gas is fed from the raw gas feeder 81; a pipe forming the water feed channel 53 by way of which water is fed from the water feeder 82; a pipe forming the oxidation air feed channel 58 by way of which oxidation air is fed from the oxidation air feeder 84; a pipe forming the combustion air feed channel 54 by way of which combustion air is fed from the combustion air feeder 83; a pipe forming the combustion gas discharge channel 56 by way of which a combustion exhaust developed in the combustor 4 is discharged; and a pipe forming the fuel gas feed channel 57 by way of which a fuel gas is fed to the fuel cell 60. It is, however, desirable that all of the metallic pipes in the pipe group be connected to the pipe orifice forming body 62.

In the embodiment, the explanation has been given to the configuration in which the hydrogen generation device 76 is implemented by integrally placing the reformer 8, the shift unit 10a, and the oxidation unit 10b in one housing 3. However, the hydrogen generation device is not limited to the configuration. The present invention can also be applied, for example, to a configuration in which the reformer 8, the shift unit 10a, and the oxidation unit 10b are provided in respective independent containers.

In the embodiment, the pipe orifice forming body 62 is provided aside from the housing 3 in the hydrogen generation device main body 78. Even when the pipe orifice forming body 62 is not provided, the advantage of the present invention can be yielded by arranging all of the pipes and the support in the low temperature portion.

### (Second Embodiment)

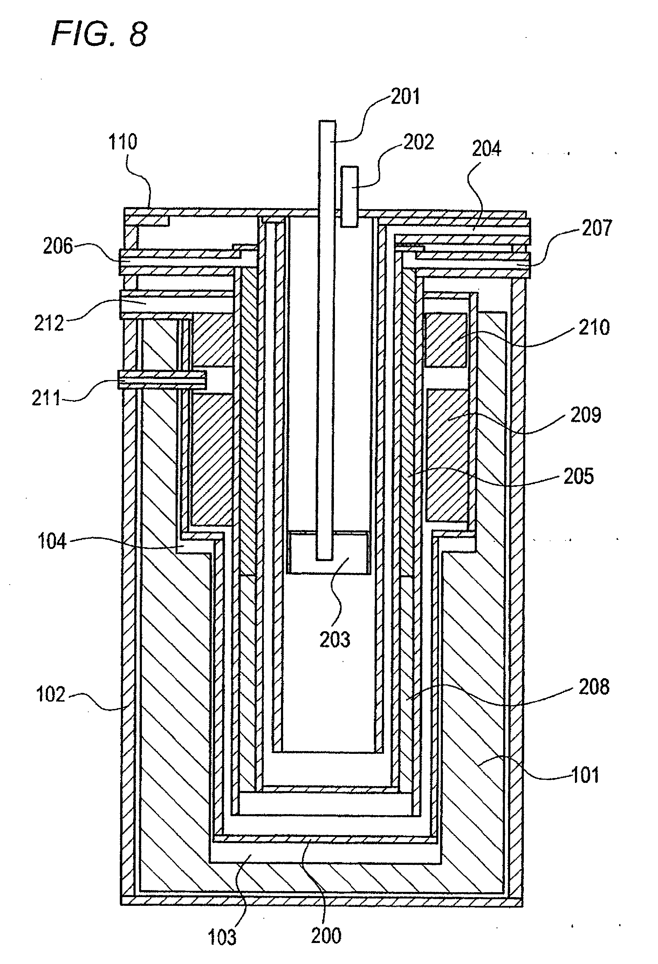

A hydrogen generator (a hydrogen generation device) of a second embodiment of the present invention is now described by reference to Fig. 8. As shown in Fig. 8, the hydrogen generator of the second embodiment of the present invention includes a metallic structure (a hydrogen generation device main body) 200 serving as a reaction container including catalysts, a water evaporation unit, a burner, and others; a heat insulator 101 that covers the metallic structure 200; and a frame (a support) 102 that fixes the metallic structure 200 and the heat insulator 101, to make up the hydrogen generator. The hydrogen generator of the present embodiment is equivalent to the hydrogen generation device 76 of the first embodiment. The metallic structure 200 is equivalent to the hydrogen generation device main body 78 of the first embodiment.

The metallic structure 200 is fixed to the frame 102 by means of a retaining unit 110. An entire outer periphery of the heat insulator 101 is fixed to the frame 102. The frame 102 is equivalent to the support 70 of the first embodiment.

The metallic structure 200 has a burner 203 disposed at a position lower than the retaining unit 110 of the metallic structure 200. The burner 203 mixes a fuel gas fed from a fuel gas pipe 201 (equivalent to the off-gas flow channel 51 of the first embodiment) with combustion air fed from a combustion air pipe 202 (equivalent to the combustion air feed channel 54 of the first embodiment), thereby generating flames. A combustion exhaust gas produced by the burner 203 is discharged out of the hydrogen generator by way of a combustion exhaust gas outlet pipe 204 (equivalent to the combustion gas discharge channel 56 of the first embodiment).

A water evaporation-mixing unit 205 heated by an exhaust gas of the burner 203 is fed with a raw gas from a raw gas pipe 206 (equivalent to the raw gas feed channel 52 of the first embodiment) and water from a water pipe 207 (equivalent to the water feed channel 53 of the first embodiment). They are fed, as a gas mixture consisting of the raw gas and steam, to a reforming catalyst layer 208 (equivalent to the reforming catalyst 7 and the reformer 8 of the first embodiment) disposed in a lower portion of the water evaporation-mixing unit 205.

A reformed gas sent from the reforming catalyst layer 208 is fed to a shift catalyst layer 209 (equivalent to the CO shift catalyst 9a and the shift unit 10a of the first embodiment). A shifted gas sent from the shift catalyst layer 209 is fed to a selective oxidation catalyst layer 210 (equivalent to the CO oxidation catalyst 9b and the oxidation unit 10b of the first embodiment) after having been mixed with a selective oxidation air from a selective oxidation air pipe 211 (equivalent to the oxidation air feed channel 58 of the first embodiment). A produced gas emitted from the selective oxidation catalyst layer 210 is sent from the hydrogen generator by way of a produced gas outlet pipe 212 (equivalent to the fuel gas feed channel 57 of the first embodiment).

Operation of the respective portions of the hydrogen generator having the foregoing configuration is now described.

The burner 203 mixes the fuel gas with air and subjects a mixed gas to a high voltage discharge (a configuration of the discharge is unillustrated), thereby generating flames and a high-temperature combustion exhaust gas. The reforming catalyst layer 208 and the water evaporation-mixing unit 205 are thereby heated, whereupon the gas is discharged out of the hydrogen generator by way of the combustion exhaust gas outlet pipe 204.

The raw fed from the raw gas pipe 206 and the water fed from the water pipe 207 receive heat from the combustion exhaust gas flowing through an interior of the water evaporation-mixing unit 205, whereby water evaporates. Concurrently, the steam is mixed with the raw gas flowing through the same flow channel in the water evaporation-mixing unit 205, and a resultant gas is fed as a mixed gas to the reforming catalyst layer 208.

The reforming catalyst layer 208 is heated to 600°C to 700°C by means of high-temperature combustion exhaust gas flowing through the interior of the reforming catalyst layer. As a result of the reforming catalyst layer being fed with the mixed gas, a reformed gas containing hydrogen, carbon monoxide, carbon dioxide, and others, is produced by means of a steam reforming reaction.

The shift catalyst layer 209 transforms a high concentration of carbon monoxide (10 to 15%) in the reformed gas into carbon dioxide at 200°C to 300°C by means of a shift reaction, thereby decreasing the concentration of carbon monoxide (approx. 0.5%).

The selective oxidation catalyst layer 210 mixes the shifted gas with air fed from the selective oxidation air pipe 211, whereby carbon monoxide in the shifted gas is decreased to a very low concentration of 10 ppm or less at 100 to 200°C by means of a selective oxidation reaction.

Since the reforming catalyst layer 208 is already heated at a temperature of 600 to 700°C, the metallic structure has become longer than an original state thereof before initiation of operation, according to a material and a temperature of the structure. For example, when the metallic structure is a stainless steel material, a thermal expansion coefficient of the material is about 15×10⁻⁶ [1/K]. Therefore, when the entirety of the metallic structure is heated to 700°C, the structure expands about 1 % as compared with its state achieved before initiation of operation (at 20°C).

Provided that the length of the metallic structure is 700 mm, the structure will extend seven millimeters. In reality, the entirety of the metallic structure is not at 700°C, and a temperature distribution having a maximum of 700°C exists in the metallic structure. Therefore, the structure will extend several millimeters that are shorter than seven millimeters.

At this time, when piping is installed and secured on an exterior of the hydrogen generation device that will vertically extend several millimeters, force for effecting an extension of several millimeters will lose a place to escape. The force may act as great stress, thereby inflicting damage, such as deformation and cracking, on piping or the secured portion.

For this reason, in the present embodiment, the metallic structure 200 is secured to the frame 102 by means of the retaining unit 110 provided on top of the metallic structure 200. Concurrently, the raw gas pipe 206, the water pipe 207, the selective oxidation air pipe 211, the combustion exhaust gas outlet pipe 204, and the produced gas outlet pipe 212 are also placed in an upper portion of the metallic structure 200, to be connected to the exterior of the hydrogen generator.

Portions to be secured by means of metal are gathered into the upper portion of the metallic structure 200, whereby a portion of the metallic structure that extends by means of thermal expansion is implemented in the form of a structure that is unlimited in a downward direction.

Even when the selective oxidation air pipe 211 shown in Fig. 8 is placed at a position that is slightly lower than the upper portion of the metallic structure 200, the upper portion of the metallic structure 200 serves as the most upstream portion where the water pipe 207 and the raw gas pipe 206 are disposed. Therefore, the upper portion of the metallic structure is a low temperature portion. Specifically, a temperature gradient occurs in a heightwise direction in Fig. 8 as in the first embodiment. A lower side of the metallic structure 200 becomes a high temperature portion, and an upper side of the same becomes a low temperature portion. The retaining unit 110 is placed at the lowest temperature position (i.e., a position farthest from the burner 203) in the low temperature portion.

Therefore, the upper portion of the metallic structure 200 becomes an portion that experiences the least thermal expansion. Even when pipes, such as the selective oxidation air pipe 211, are placed at positions that are slightly lower than the upper portion, an expansion which would be caused by a temperature increase during operation hardly occurs, so that great stress does not act on the pipes.

Therefore, so long as pipes are set in the upper portion of the metallic structure 200 along with the retaining unit, even when the metallic structure is restrained by a connection of the pipes with the exterior of the hydrogen generator, thermal expansion will hardly arise. Therefore, the pipes and the retaining unit are not subjected to stress, and a retained and fixed state of the metallic structure does not change between a halt and operation. Hence, it is possible to maintain a stable state of the structure.

However, there are excluded wires that are not pipes; that are highly flexible, such as temperature sensors, and that are connected to the exterior of the hydrogen generator. Even when the wires are placed in the lower portion of the metallic structure 200 and connected to the outside, the structure will not be affected.

In the present embodiment, the heat insulator 101 is placed outside the metallic structure 200. Further, a first space 103 is provided between a bottom of the metallic structure 200, which is opposite to the portion of the metallic structure 200 provided with the retaining unit and the heat insulator 101, in such a way that the metallic structure 200 does not interfere with the heat insulator 101 when extended during operation.

By means of the space, the position of the heat insulator 101 remains stable during both a halt and operation regardless of the state of the metallic structure 200. The heat insulator will not extend thinly, nor will clearance arise. Thus, stable heat insulating performance can be maintained.

So long as the space has a length of 1 % or more of the length between the bottom of the metallic structure 200 and the retaining unit 110, occurrence of an interference, which would otherwise be caused by thermal expansion, can be avoided.

In relation to a configuration of a hydrogen generator in which the reforming catalyst layer 208, the shift catalyst layer 209, and the selective oxidation catalyst layer 210 do not overlap each other in their heightwise directions (do not overlap each other in the direction of a temperature gradient), the configuration becomes longer particularly in a heightwise direction. Therefore, the structure has a high potential of extending much longer when thermally expanded, and hence the configuration of the present invention is more effective.

A portion where space is provided between the metallic structure 200 and the heat insulator 101 is not limited solely to the bottom of the metallic structure 200 opposite to the retaining unit thereof, but also to a location where the metallic structure 200 may interfere with the heat insulator 101 with high possibility when thermally expanded, in consideration of a distance from the retaining unit 110 of the metallic structure 200 and a temperature. The portion is set as a second space 104, such as that shown in Fig. 8.

Structural differences existing between the first embodiment and the second embodiment can also be adopted in another embodiment unless they impede yielding of the original advantage of the invention.

The present invention is based on Japanese Patent Application No. 2008-192200 filed on July 25, 2008 and Japanese Patent Application No. 2008-230537 filed on September 9, 2008, the entire contents of which is incorporated herein by reference.

Although the explanations have been given to the respective embodiments of the present invention, the present invention is not limited to the matters described in connection with the embodiments of the present invention. The present invention is to be subjected to alterations or applications by the partisans according to the descriptions of the patent application and the well-known techniques, as well, and shall fall in a range where protection is sought.

### Industrial Applicability

A hydrogen generation device of the present invention makes it possible to diminish a possibility of various pipes connected to a hydrogen generation device main body being broken by thermal stress attributable to thermal expansion occurring during operation and cooling contraction occurring during a halt. The present invention can be widely applied to the hydrogen generation device having a reformer and a combustor. Further, a fuel cell system having such a hydrogen generation device is suitable for use with a home fuel cell system, or the like.

### Description of Preference Signs

- 1: INNER SLEEVE
- 2: OUTER SLEEVE
- 3: CYLINDRICAL ELEMENT
- 3a: BARREL
- 3b: FLANGE
- 4: COMBUSTOR
- 5: FUEL GAS FLOW CHANNEL
- 6: PREHEAT EVAPORATION UNIT
- 7: REFORMING CATALYST
- 8: REFORMER
- 9a: CO SHIFT CATALYST
- 9b: CO OXIDATION CATALYST
- 10: CARBON MONOXIDE DECREASING UNIT
- 10a: SHIFT UNIT
- 10b: OXIDATION UNIT
- 51: OFF-GAS FLOW CHANNEL
- 52: RAW GAS FEED CHANNEL
- 53: WATER FEED CHANNEL
- 54: COMBUSTION AIR FEED CHANNEL
- 56: COMBUSTION GAS DISCHARGE CHANNEL
- 57: FUEL GAS FEED CHANNEL
- 58: OXIDATION AIR FEED CHANNEL
- 60: FUEL CELL
- 61: HEAT INSULATING MEMBER
- 62: PIPE ORIFICE FORMING BODY
- 63: PIPE CONNECTION UNIT
- 65: RETAINER
- 66: FASTENING MEMBER
- 70: SUPPORT
- 71: BOTTOM PLATE
- 72: PILLAR
- 75: OUTPUT CONTROLLER
- 76: HYDROGEN GENERATION DEVICE
- 77: OXIDANT GAS SUPPLY UNIT
- 78: HYDROGEN GENERATION DEVICE MAIN BODY
- 81: RAW GAS FEEDER
- 82: WATER FEEDER
- 83: COMBUSTION AIR FEEDER
- 84: OXIDATION AIR FEEDER
- 100: FUEL CELL SYSTEM
- 101: HEAT INSULATOR
- 102: FRAME
- 103: FIRST SPACE
- 104: SECOND SPACE
- 110: RETAINING UNIT
- 200: METALLIC STRUCTURE
- 201: FUEL GAS PIPE
- 202: COMBUSTION AIR PIPE
- 203: BURNER
- 204: COMBUSTION EXHAUST GAS OUTLET PIPE
- 205: WATER EVAPORATION MIXING UNIT
- 206: RAW GAS PIPE
- 207: WATER PIPE
- 208: REFORMING CATALYST LAYER
- 209: SHIFT CATALYST LAYER
- 210: SELECTIVE OXIDATION CATALYST LAYER
- 211: SELECTIVE OXIDATION AIR PIPE
- 212: PRODUCED GAS OUTLET PIPE

## Claims

1. A hydrogen generation device comprising:
a main body (78) comprising a combustion unit (4) which is provided therein and is configured to combust a predetermined medium capable of generating hydrogen; and
a plurality of pipes connected to the main body (78) for allowing the predetermined medium to flow into or out of the main body (78),
wherein the main body comprises therein a reforming unit (8) configured to subject a raw gas serving as the predetermined medium and steam to reforming reaction, thereby generating a reformed gas containing hydrogen;
wherein temperature gradient is formed in the main body (78) by operation of the combustion unit (4), whereby a high temperature portion and a low temperature portion are formed in the main body (78), wherein a lower side of the main body (78) is the high temperature portion and an upper side of the main body (78) is the low temperature portion,
wherein said hydrogen generation device further comprises a support (3b, 70) that supports the main body (78) from an outside of the low temperature portion and a pipe orifice forming body (62), both provided in the low temperature portion of the main body (78),
wherein pipe orifices (62a) are formed in the pipe orifice forming body (62) and the pipe orifices (62a) are used for connection with at least a part of the plurality of pipes, and
wherein the support (3b, 70) is connected to the pipe orifice forming body (62) to support the main body (78),
**characterized in that**
at least a part of the plurality of pipes are arranged in the low temperature portion.

2. The hydrogen generation device according to claim 1, wherein the at least a part of the plurality of pipes are connected to the pipe orifice forming body (62).

3. The hydrogen generation device according to claim 1,
wherein the main body further comprises therein:
a shift unit (10a) configured to decrease carbon monoxide in the reformed gas by CO shift reaction; and
an oxidation unit (10b) configured to subject the reformed gas in which carbon monoxide is decreased by the shift unit to CO oxidation in conjunction with oxygen, thereby further decreasing carbon monoxide, and
wherein the plurality of pipes and the support (3b, 70) are situated on a lower temperature side of the low temperature portion than the shift unit (10a) and the oxidation unit (10b).

4. The hydrogen generation device according to claim 3, wherein the reforming unit (8), the shift unit (10a), and the oxidation unit (10b) are placed so as not to overlap in a direction of the temperature gradient.

5. The hydrogen generation device according to claim 1,
wherein a heat insulator (61) is provided between the main body (78) and the support (3b), and
wherein space is provided between the heat insulator (61) and a face of the main body (78) on a high temperature side which opposes the heat insulator (61).

6. The hydrogen generation device according to claim 5, wherein the space has a length longer than a length of an extension of the main body (78) when the main body (78) is thermally expanded during operation of the combustion unit (4).

7. The hydrogen generation device according to claim 1 or 2, wherein a retainer (65) for retaining the main body (78) on the support (3b, 70) is provided, and a fastening member (65) for fastening the support (3b, 70) and the pipe orifice forming body (62) is placed at least two positions on the retainer (65) and pipe orifices (62a) are sandwiched therebetween.

8. The hydrogen generation device according to claim 1 or 2, wherein the pipe orifice forming body (62) is disposed at one end of the main body (78) when viewed in an axial direction of the main body (78).

9. The hydrogen generation device according to claim 1 or 2, wherein the heat insulator (61) is provided between the main body (78) and the pipe orifice forming body (62).

10. The hydrogen generation device according to any one of claims 1 to 9, wherein the pipe orifice forming body (62) is placed at a position opposite to the direction of emission of flames from the combustion unit (4).

11. A fuel cell system comprising: the hydrogen generation device (76) according to any one of claims 1 to 10; and a fuel cell (60) configured to produce electric power by using a hydrogen-containing gas fed from the hydrogen generation device (76).

## Patentansprüche

1. Wasserstofferzeugungsvorrichtung, umfassend:
einen Hauptkörper (78), der eine Verbrennungseinheit (4) umfasst, die in diesem vorgesehen und dazu eingerichtet ist, ein vorbestimmtes Medium zu verbrennen, das in der Lage ist, Wasserstoff zu erzeugen; und
eine Vielzahl von Rohren, die mit dem Hauptkörper (78) verbunden sind, um es dem vorbestimmten Medium zu gestatten, in den Hauptkörper (78) oder aus diesem zu fließen,
wobei sich in dem Hauptkörper eine Reformiereinheit (8) befindet, die dazu eingerichtet ist, ein Rohgas, das als das vorbestimmte Medium dient, und Dampf einer Reformierreaktion zu unterziehen, wodurch ein reformiertes Gas erzeugt wird, das Wasserstoff enthält;
der Temperaturgradient in dem Hauptkörper (78) durch Tätigkeit der Verbrennungseinheit (4) erzeugt wird, wodurch ein Hochtemperaturabschnitt und ein Niedertemperaturabschnitt in dem Hauptkörper (78) erzeugt werden, wobei eine untere Seite des Hauptkörpers (78) der Hochtemperaturabschnitt und eine obere Seite des Hauptkörpers (78) der Niedertemperaturabschnitt ist,
die Wasserstofferzeugungsvorrichtung weiterhin einen Träger (3b, 70), der den Hauptkörper (78) von außerhalb des Niedertemperaturabschnittes hält, und einen rohröffnungsbildenden Körper (62) umfasst, die beide in dem Niedertemperaturbereich des Hauptkörpers (78) vorgesehen sind,
Rohröffnungen (62a) in dem rohröffnungsbildenden Körper (62) ausgebildet sind und die Rohröffnungen (62a) für eine Verbindung mit wenigstens einem Teil der Vielzahl von Rohren verwendet werden und
der Träger (3b, 70) mit dem rohröffnungsbildenden Körper (62) verbunden ist, um den Hauptkörper (78) zu halten,
**dadurch gekennzeichnet, dass**
wenigstens ein Teil der Vielzahl von Rohren in dem Niedertemperaturabschnitt angeordnet ist.

2. Wasserstofferzeugungsvorrichtung nach Anspruch 1, bei der wenigstens der Teil der Vielzahl von Rohren mit dem rohröffnungsbildenden Körper (62) verbunden ist.

3. Wasserstofferzeugungsvorrichtung nach Anspruch 1,
bei der sich in dem Hauptkörper weiterhin befinden:
eine Shift-Einheit (10a), die dazu eingerichtet ist, Kohlenmonoxid in dem reformierten Gas durch eine CO-Shift-Reaktion zu vermindern; und
eine Oxidationseinheit (10b), die dazu eingerichtet ist, das reformierte Gas, in dem das Kohlenmonoxid durch die Shift-Einheit vermindert ist, einer CO-Oxidation in Verbindung mit Sauerstoff zu unterziehen, wodurch das Kohlenmonoxid weiter vermindert wird, wobei
sich die Vielzahl von Rohren und der Träger (3b, 70) auf einer Seite niedrigerer Temperatur des Niedertemperaturbereiches als die Shift-Einheit (10a) und die Oxidationseinheit (10b) befinden.

4. Wasserstofferzeugungsvorrichtung nach Anspruch 3, bei der die Reformiereinheit (8), die Shift-Einheit (10a) und die Oxidationseinheit (10b) derart angeordnet sind, dass sie in einer Richtung des Temperaturgradienten einander nicht überlappen.

5. Wasserstofferzeugungsvorrichtung nach Anspruch 1,
bei der ein Wärmeisolator (61) zwischen dem Hauptkörper (78) und dem Träger (3b) vorgesehen ist, und
ein Zwischenraum zwischen dem Wärmeisolator (61) und einer Fläche des Hauptkörpers (78) auf einer Hochtemperaturseite vorgesehen ist, die dem Wärmeisolator (61) gegenüberliegt.

6. Wasserstofferzeugungsvorrichtung nach Anspruch 5, bei der der Zwischenraum eine Länge hat, die größer ist als eine Länge einer Ausdehnung des Hauptkörpers (78), wenn sich der Hauptkörper (78) während des Betriebs der Verbrennungseinheit (4) thermisch ausdehnt.

7. Wasserstofferzeugungsvorrichtung nach Anspruch 1 oder 2, bei der ein Halter (65) zum Halten des Hauptkörpers (78) auf dem Träger (3b, 70) vorgesehen ist und ein Befestigungselement (65) zum Befestigen des Trägers (3b, 70) und des rohröffnungsbildenden Körpers (62) an wenigstens zwei Abschnitten des Halters (65) vorgesehen ist, wobei die Rohröffnungen dazwischen sandwichartig angeordnet sind.

8. Wasserstofferzeugungsvorrichtung nach Anspruch 1 oder 2, bei der der rohröffnungsbildende Körper (62) an einem Ende des Hauptkörpers (78), in Achsrichtung des Hauptkörpers (78) betrachtet, angeordnet ist.

9. Wasserstofferzeugungsvorrichtung nach Anspruch 1 oder 2, bei der der Wärmeisolator (61) zwischen dem Hauptkörper (78) und dem rohröffnungsbildenden Körper (62) vorgesehen ist.

10. Wasserstofferzeugungsvorrichtung nach einem der Ansprüche 1 bis 9, bei der der rohröffnungsbildende Körper (62) an einer Position gegenüberliegend der Emissionsrichtung der Flammen aus der Verbrennungseinheit (4) angeordnet ist.

11. Brennstoffzellensystem, umfassend: die Wasserstofferzeugungsvorrichtung (76) nach einem der Ansprüche 1 bis 10; und eine Brennstoffzelle (60), die dazu eingerichtet ist, elektrische Leistung mit Hilfe eines wasserstoffhaltigen Gases zu erzeugen, das von der Wasserstofferzeugungsvorrichtung (76) zugeführt wird.

## Revendications

1. Dispositif de génération d'hydrogène comprenant :
un corps principal (78) comportant une unité de combustion (4) qui y est agencée et est configurée pour brûler un support prédéterminé capable de générer de l'hydrogène ; et
une pluralité de tubes connectés au corps principal (78) pour permettre au support prédéterminé de s'écouler dans le corps principal (78) ou hors de celui-ci,
dans lequel le corps principal comprend une unité de reformage (8) configurée pour soumettre un gaz brut servant de support prédéterminé et de la vapeur à une réaction de reformage, générant ainsi un gaz reformé contenant de l'hydrogène ;
dans lequel un gradient de température est formé dans le corps principal (78) par le fonctionnement de l'unité de combustion (4), dans lequel une partie à haute température et une partie à basse température sont formées dans le corps principal (78), dans lequel un côté inférieur du corps principal (78) est la partie à haute température et un côté supérieur du corps principal (78) est la partie à basse température,
dans lequel ledit dispositif de génération d'hydrogène comprend en outre un support (3b, 70) qui supporte le corps principal (78) depuis l'extérieur de la partie à basse température et un corps formant des orifices de tube (62), pourvus tous deux dans la partie à basse température du corps principal (78),
dans lequel des orifices de tube (62a) sont formés dans le corps formant des orifices de tube (62) et les orifices de tube (62a) sont utilisés pour une établir une connexion avec au moins une partie de la pluralité de tubes, et
dans lequel le support (3b, 70) est connecté au corps formant des orifices de tube (62) pour supporter le corps principal (78),
**caractérisé en ce que**
au moins une partie de la pluralité de tubes est agencée dans la partie à basse température.

2. Dispositif de génération d'hydrogène selon la revendication 1, dans lequel les tubes de ladite au moins une partie de la pluralité de tubes sont connectés au corps formant des orifices de tube (62).

3. Dispositif de génération d'hydrogène selon la revendication 1,
dans lequel le corps principal comprend en outre :
une unité de conversion (10a) configurée pour réduire la quantité de monoxyde de carbone dans le gaz reformé par une réaction de conversion du CO ; et
une unité d'oxydation (10b) configurée pour soumettre le gaz reformé dans lequel la quantité de monoxyde de carbone est réduite par l'unité de conversion à une oxydation du CO conjointement à de l'oxygène, réduisant ainsi encore la quantité de monoxyde de carbone, et
dans lequel la pluralité de tubes et le support (3b, 70) sont situés sur un côté à plus basse température de la partie à basse température que l'unité de conversion (10a) et l'unité d'oxydation (10b) .

4. Dispositif de génération d'hydrogène selon la revendication 3, dans lequel l'unité de reformage (8), l'unité de conversion (10a) et l'unité d'oxydation (10b) sont placées de manière à ne pas se chevaucher en direction du gradient de température.

5. Dispositif de génération d'hydrogène selon la revendication 1,
dans lequel un isolant thermique (61) est pourvu entre le corps principal (78) et le support (3b), et
dans lequel un espace est pourvu entre l'isolant thermique (61) et une face du corps principal (78) sur un côté haute température opposé à l'isolant thermique (61).

6. Dispositif de génération d'hydrogène selon la revendication 5, dans lequel l'espace présente une longueur supérieure à une longueur d'une extension du corps principal (78) lorsque le corps principal (78) se dilate thermiquement durant le fonctionnement de l'unité de combustion (4).

7. Dispositif de génération d'hydrogène selon la revendication 1 ou 2, dans lequel une pièce de retenue (65) est pourvue pour retenir le corps principal (78) sur le support (3b, 70), et un élément de fixation (65) pour fixer le support (3b, 70) et le corps formant des orifices de tube (62) est placé à au moins deux emplacements sur la pièce de retenue (65) et des orifices de tube (62a) sont intercalés entre eux.

8. Dispositif de génération d'hydrogène selon la revendication 1 ou 2, dans lequel le corps formant des orifices de tube (62) est disposé à une extrémité du corps principal (78) lorsqu'il est vu en direction axiale du corps principal (78).

9. Dispositif de génération d'hydrogène selon la revendication 1 ou 2, dans lequel l'isolant thermique (61) est pourvu entre le corps principal (78) et le corps formant des orifices de tube (62).

10. Dispositif de génération d'hydrogène selon l'une quelconque des revendications 1 à 9, dans lequel le corps formant des orifices de tube (62) est placé à une position opposée à la direction d'émission de flammes de l'unité de combustion (4).

11. Système de pile à combustible comprenant : le dispositif de génération d'hydrogène (76) selon l'une quelconque des revendications 1 à 10 ; et une pile à combustible (60) configurée pour produire de l'énergie électrique en utilisant un gaz contenant de l'hydrogène alimenté par le dispositif de génération d'hydrogène (76).
